# EUROPÄISCHE PATENTSCHRIFT

(11) **EP 0 988 165 B1**
(45) Veröffentlichungstag und Bekanntmachung des Hinweises auf die Patenterteilung: **08.01.2003**
(21) Anmeldenummer: 98934965.9
(22) Anmeldetag: 17.06.1998
(51) Int. Cl.: B60H 1/34

(54) **LUFTSTROMREGULIERUNGSDÜSE ZUR BELÜFTUNG EINES KRAFTFAHRZEUGINNENRAUMES**
AIR CURRENT REGULATING NOZZLE FOR VENTILATING THE INSIDE OF AN AUTOMOBILE
BUSE DE REGULATION D'ECOULEMENT D'AIR POUR L'AERATION DE L'HABITACLE D'UN VEHICULE

(30) Priorität: 18.06.1997 DE 19725682
(43) Veröffentlichungstag der Anmeldung: 29.03.2000
(73) Patentinhaber: Volkswagen Aktiengesellschaft, 38436 Wolfsburg (DE)
(72) Erfinder: SCHWANDT, Andreas, D-31303 Burgdorf (DE); HASENAUER, Silke, D-38553 Wasbüttel (DE); SEYDELL, Bertram, D-38104 Braunschweig (DE)
(86) Internationale Anmeldenummer: EP9803634
(87) Internationale Veröffentlichungsnummer: WO98057815

(56) Entgegenhaltungen:
- FR-A- 2 710 879
- US-A- 3 949 656
- US-A- 5 063 833
- US-A- 5 364 303
- US-A- 5 470 276
- US-A- 5 591 079

## Beschreibung

Die Erfindung betrifft eine Luftstromregulierungsdüse zur Belüftung eines Kraftfahrzeuginnenraumes, insbesondere zur Anordnung im Armaturenbrettbereich eines Kraftfahrzeuges.

Luftstromregulierungsdüsen dienen der Regulierung der Richtung und Ausbreitungsdichte eines vom Fahrtwind oder von einem Ventilator erzeugten und in den Innenraum eines Kraftfahrzeuges geleiteten Luftstromes und sind an der Austrittsstelle desselben im Kraftfahrzeuginnenraum angeordnet.

Um den Luftstrom in vorbestimmten Grenzen in seiner Charakteristik und Ausströmrichtung verändern zu können, können die Luftstromregulierungsdüsen aus hintereinander oder ineinander angeordneten und voneinander getrennt betätigbaren Blöcken von im wesentlichen parallel ausgerichteten Lamellen gebildet sein, von denen die Lamellen des einen Blockes um eine vertikale Achse und die des anderen Blockes um eine horizontale Achse schwenkbar sind.

So ist aus der gattungsgemäßen FR 27 10 879 A1 eine Luftstromregulierungsdüse zur Belüftung eines Kraftfahrzeuginnenraums mit verstellbaren, zwangsgekoppelten Lamellen als Bestandteil eines Lamellenblocks bekannt. Der Lamellenblock ist in einem Düsengehäuse im Bereich einer dem Kraftfahrzeuginnenraum zugeordneten Luftaustrittsöffnung angeordnet, wobei mittels wenigstens einer Verstelleinrichtung die Lamellen zwischen unterschiedlichen Verstellpositionen verstellbar sind, wobei in einer Parallelströmungs-Verstellposition die Lamellen jeweils parallel zueinander ausgerichtet sind und in Divergier-Verstellpositionen wenigstens eine der Lamellen bezüglich wenigstens einer weiteren Lamelle divergiert.

Konkret sind hier in einem Luftströmungskanal rechteckigen Querschnitts zwei Lamellenblöcke in Fahrzeuglängsrichtung hintereinander angeordnet, von denen der dem Fahrzeuginnenraum zugewandte Lamellenblock aus horizontal und im Abstand übereinander angeordneten und der vor diesem im Inneren des Luftströmungskanals befindliche Lamellenblock aus vertikal und im Abstand nebeneinander angeordneten Lamellen gebildet ist. Die Lamellen des fahrzeuginnenraumseitigen Blockes sind fahrzeuginnenraumseitig einzeln am Luftströmungskanal schwenkbar gelagert und auf ihrer der Lagerung abgewandten Seite mit einem Verbindungsglied gelenkig verbunden, das mit einem zentralen und etwa mittig an diesem angreifenden Bedienungselement zusammenwirkt. Die oberhalb des Bedienungselementes am Verbindungsglied angeordneten Lamellen sind in Fahrzeuglängsrichtung ausziehbar ausgebildet und die unterhalb desselben teilweise mit Kulissenführungen versehen. Bei einer Betätigung des Bedienungselementes in Fahrzeuglängsrichtung sind die so ausgebildeten Lamellen zwischen einer Stellung, in der diese in parallelen Ebenen angeordnet sind, und einer Stellung, in der diese in Richtung zum Fahrzeuginnenraum zu und dann mit Abstand davon divergieren, schwenkbar. In der Divergentstellung erfährt der Luftstrom eine mit Strömungsverlusten verbundene leichte Streuung, jedoch praktisch keine nach unten gerichtete Umlenkung. Bei dieser Ausströmung werden die Querschnitte zwischen dem Lamellenblock und dem Düsengehäuse verengt. Unter Umständen ist deshalb mit unerwünschten und von den Fahrzeuginsassen als unangenehm empfundenen Turbulenzen zu rechnen.

Auch die vertikal und im Abstand nebeneinander angeordneten Lamellen sind an dem Bedienungselement angelenkt und so ausgebildet, dass sie bei der Betätigung desselben In Fahrzeuglängsrichtung um ihre vertikale Schwenkachse schwenkbar und in eine Divergentstellung bringbar sind und in dieser den Luftstrom mehr trichterförmig auf den fahrzeuginnenraumseitigen Lamellenblock leiten und damit die Charakteristik des Luftstroms in gleicher Weise wie der innenraumseitige Lamellenblock verändern. Zudem ist hier das Bedienungselement mit Wirkung für den Lamellenblock mit den vertikal angeordneten Lamellen quer zur Fahrzeuglängsrichtung verschiebbar, wodurch die Lamellen gegenüber der Fahrzeuglängsrichtung verschwenkbar sind und dadurch die Richtung des auf den fahrzeuginnenraumseitigen Lamellenblock treffenden Luftstromes in der Horizontalen veränderbar ist. Im Zusammenwirken der beiden Lamellenblöcke sind somit hinsichtlich Richtung und Charakteristik sehr unterschiedliche Luftströme einstellbar.

Insgesamt handelt es sich hierbei jedoch um eine sehr aufwendig herzustellende Luftstromregulierungsdüse, die für einen Bediener zudem relativ aufwendig zu bedienen ist. Des weiteren kann mit einer derartigen Luftstromregulierungsdüse lediglich eine leichte Streuung des Luftstroms und eine Richtungsänderung desselben erzielt werden, wobei es jedoch insbesondere in der Divergierstellung durch die Verengung des Querschnittes zu unerwünschten Turbulenzen und Verwirbelungen kommen kann.

Weiter ist eine Luftstromregulierungsdüse aus der gattungsgemäßen US-A-3,949,656 bekannt, bei der in einer Verschwenkstellung der Schwenkelemente eine Querschnittsverengung stattfindet. Dadurch kommt es zu unerwünschten Verwirbelungen und Turbulenzen, die für den angeströmten Fahrzeuginsassen ein unangenehmes Kühlungsempfinden verursachen. Ein derartiger Aufbau ist somit wenig praktikabel.

Es ist daher Aufgabe der Erfindung, eine Luftstromregulierungsdüse zur Belüftung eines Kraftfahrzeuginnenraums zu schaffen, mit der die Ausbildung von unerwünschten Verwirbelungen weitgehend unterbunden werden kann.

Die Aufgabe wird gelöst mit den Merkmalen des Patentanspruchs 1.

Gemäß dem Patentanspruch 1 ist das Düsengehäuse im Bereich der Luftaustrittsöffnung wenigstens abschnittsweise mit einer trichterförmigen Erweiterung ausgebildet, der eine Lamelle dergestalt zugeordnet ist:
- dass die Lamelle in der Parallelströmungs-Verstellposition mit einem in Strömungsrichtung gesehen strömungsaufwärts liegenden, hinteren Lamellen-Randbereich an der Düsengehäusewand am Beginn der trichterförmigen Erweiterung anliegt und zur Erzeugung einer Parallelströmung eine in etwa geradlinige Verlängerung der Düsengehäusewand unter Überdeckung der trichterförmigen Erweiterung ausbildet, so dass der Luftstrom in diesem Bereich entlang der der trichterförmigen Erweiterung abgewandten Oberseite der Lamelle über die Luftaustrittsöffnung ausströmt, und
- dass die Lamelle in einer Divergier-Verstellposition mit dem in Strömungsrichtung gesehen strömungsaufwärts liegenden hinteren Lamellen-Randbereich so von der Düsengehäusewand am Beginn der trichterförmigen Erweiterung abgehoben ist, dass die Lamelle beabstandet und in etwa parallel zur trichterförmigen Erweiterung verläuft, so dass ein Teilstrom des Luftstroms zwischen der Lamelle und der trichterförmigen Erweiterung über die Luftaustrittsöffnung abströmt.

Die erfindungsgemäße Luftstromregulierungsdüse ist also in der Weise gestaltet, dass sich wahlweise zur Bündelung des Luftstroms eine Parallelströmung oder zur Spreizung des Luftstromes eine divergierende Strömung einstellen lässt. Dazu wird das Düsengehäuse mit einer trichterförmigen Erweiterung ausgebildet, wobei mit dem vorliegenden Aufbau einer Luftstromregulierungsdüse gerade keine Querschnittsverengung in den Divergler-Verstelipositionen erfolgt. Vielmehr ist in der bevorzugten Divergierstellung, in der die Lamelle beabstandet und parallel zur trichterförmigen Erweiterung ausgerichtet ist, ein wenigstens gleichbleibender Luftmengendurchsatz mit jedoch verringerter Luftaustrittsgeschwindigkeit möglich, so dass es im Fahrzeuginnenraum zu keinen unangenehmen Turbulenzen und Verwirbelungen kommen kann. Dies ermöglicht bei einer Anströmung eines Körpers ein angenehmes Kühlungsempfinden.

Eine bevorzugte Ausführungsform weist in bekannter Weise einen Luftströmungskanal von im wesentlichen rechteckigen Querschnitt mit einer Boden- und Deckwandung und zwei Seitenwänden, eine Öffnung zum Fahrzeuginnenraum und einen im Öffnungsbereich angeordneten Lamellenblock aus mehreren im Abstand übereinander angeordneten und jeweils um eine horizontale Achse schwenkbaren Lamellen auf. Diese sind durch ein Verstellglied zwischen einer Parallelstellung zueinander und zur Längsachse des Luftströmungskanals und einer Divergenzstellung zueinander zur Öffnung hin verstellbar, wodurch die Charakteristik des in den Fahrzeuginnenraum geleiteten Luftstromes und dessen Richtung in vertikaler Ebene veränderbar ist. Dabei ist die Bodenwandung des Luftströmungskanals im Bereich des Lamellenblockes zur Öffnung zu nach unten unter Bildung eines spitzen Winkels geneigt und die untere Lamelle des Lamellenblockes ist in der Divergenzstellung parallel zu dem geneigten Bodenwandungsbereich angeordnet. Durch diese Gestaltung werden unabhängig von der Lamellenstellung unerwünschte Luftnebenströmungen bei der Belüftung des Fahrzeuginnenraumes vermieden. Als ausreichend haben sich Neigungswinkel von 15° - 25° erwiesen, durch den die Öffnung der Luftstromregulierungsdüse nur unwesentlich vergrößert wird. Für die Modifikation von Düsengehäusen, wie sie von der Anmelderin in den Fahrzeugreihen T4 und Sharan bevorzugt im Bereich des Klimahimmels verwendet werden, liegt das Optimum zwischen 19° und 21°. Der Einsatz der erfindungsgemäßen Luftstromregulierungsdüse ist aber auch im Bereich von Armaturentafeln oder Seitenwandverkleidungen denkbar.

In bekannter Weise kann dem Lamellenblock im Innern des Luftströmungskanals ein aus mehreren um eine vertikale Achse schwenkbaren Lamellen gebildeter Lamellenblock vorgelagert sein, der den Luftstrom mehr oder weniger trichterförmig oder auch schräg zur Längsachse des Luftströmungskanals auf den öffnungsseitigen Lamellenblock richtet und dadurch zu einer noch differenzierteren Belüftung des Kraftfahrzeuginnenraumes beiträgt.

Der nach unten geneigte Bodenwandungsbereich kann auch leicht nach unten gewölbt sein, um selbst bei einer höheren Belüftungsstufe mit höherer Luftströmungsgeschwindigkeit eine Verwirbelung des Luftstromes an der unteren horizontalen Kante der Öffnung zuverlässig zu vermeiden. Bei dieser Ausbildung ist der Bodenwandungsbereich an seiner öffnungsseitigen Kante gegenüber der unteren Lamelle abweichend von einem Parallelverlauf leicht spitzwinklig angeordnet.

Der Lamellenblock kann dabei so gestaltet sein, dass die obere Lamelle unbeweglich fest angeordnet ist. Die weiteren Lamellen sind öffnungsseitig mit Lagerzapfen gelenkig an den Seitenwänden gehaltert. Das Verstellglied ist an der oberen Lamelle im Abstand von der Öffnung an deren strömungskanalinnenseitigen Endbereich angelenkt und steht mit den weiteren Lamellen und mit einem horizontal gelagerten Betätigungsrad in Eingriff, derart, dass bei einer Drehung des Betätigungsrades das Verstellglied um seine Anlenkachse an der oberen Lamelle verschwenkt wird, wodurch wiederum die unteren Lamellen jeweils um ihre horizontale Lagerachse verschwenkt werden. Dabei ist der Schwenkwinkel der jeweils unteren Lamelle größer als der der jeweils oberen Lamelle.

Das Verstellglied kann dabei eine einfache Pendelstange sein, die im Abstand von der Anlenkachse einen Mitnahmezapfen für eine am Betätigungsrad im Abstand von dessen Drehachse ausgebildete Langlochaussparung und Zapfen für den Eingriff in an den unteren Lamellen ausgebildete Führungen aufweist. Diese können entweder in die Lamellen eingearbeitet oder an Führungselementen ausgebildet sein, die mit den Lamellen fest verbunden sind.

Die Pendelstange und das Betätigungsrad sind auf einfache Weise zwischen dem Lamellenblock und einer Seitenwandung angeordnet. Dabei kann das Betätigungsrad mit einer Ausnehmung für die in der Seitenwandung angeordneten Lagerzapfen der Lamellen versehen sein.

Sämtliche der vorstehend beschriebenen Zusammenhänge sind auch auf Luftstromregulierungen übertragbar, bei die Spreizung des Luftstroms in einer horizontalen Ebene erfolgen soll.

Die Erfindung wird nachstehend an einem Ausführungsbeispiel erläutert. In der zugehörigen Zeichnung zeigen, teilweise schematisch und geschnitten:
- Fig. 1:: einen Längsschnitt I-I durch eine erfindungsgemäße Luftstromregulierungsdüse mit in Parallelstellung befindlichen Lamellen,
- Fig. 2:: den Lamellenblock mit in Divergenzstellung befindlichen Lamellen,
- Fig. 3:: die Luftstromregulierungsdüse in Frontansicht,
- Fig. 4:: ein Luftströmungsprofil in einer ersten Düseneinstellung, und
- Fig. 5:: ein Luftströmungsprofil in einer zweiten Düseneinstellung.

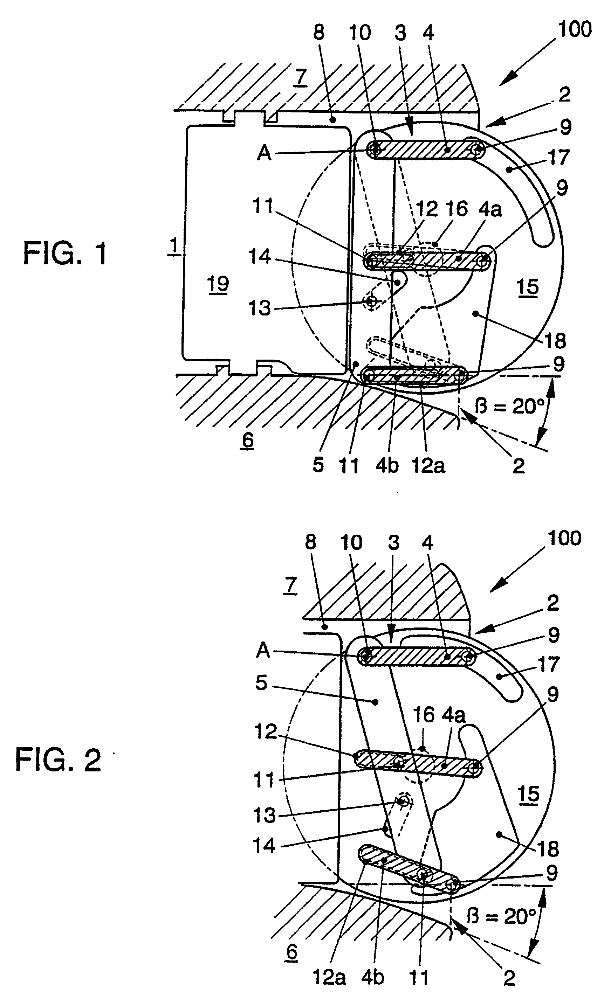

In Fig. 1 ist in einem Längsschnitt eine Luftstromregulierungsdüse 100 mit einem Luftströmungskanal 1 mit einer zum Kraftfahrzeuginnenraum weisenden Öffnung 2 und einem im Bereich der Öffnung 2 angeordneten Lamellenblock 3 dargestellt. Letzterer besteht aus drei im Abstand übereinander angeordneten Lamellen 4, 4a und 4b, die mit einer Pendelstange 5 verbunden sind, durch die die Lamellen 4a und 4b um eine horizontale Achse zwischen der dargestellten Parallelstellung zueinander und zur Längsachse des Luftströmungskanals 1 und der in Fig. 2 gezeigten Divergenzstellung zueinander zur Öffnung 2 hin verstellbar sind. Der Lamellenblock 3 ist von einer Bodenwandung 6, einer Deckwandung 7 und Seitenwänden 8 umgeben, die allesamt Bestandteil eines hier nicht gesondert bezifferten Düsengehäuses sind. Die Bodenwandung 6 ist zur Öffnung 2 zu gegenüber der Längsachse nach unten mit einer leichten Wölbung geneigt. Die geneigte Bodenwandung 6 bildet hier mit der Längsachse einen Winkel β von 20°, und die untere Lamelle 4b ist in der in Fig. 2 dargestellten Divergenzstellung parallel zur geneigten Bodenwandung angeordnet, bildet also mit der Längsachse des Luftströmungskanals 1 ebenfalls einen Winkel von 20°.

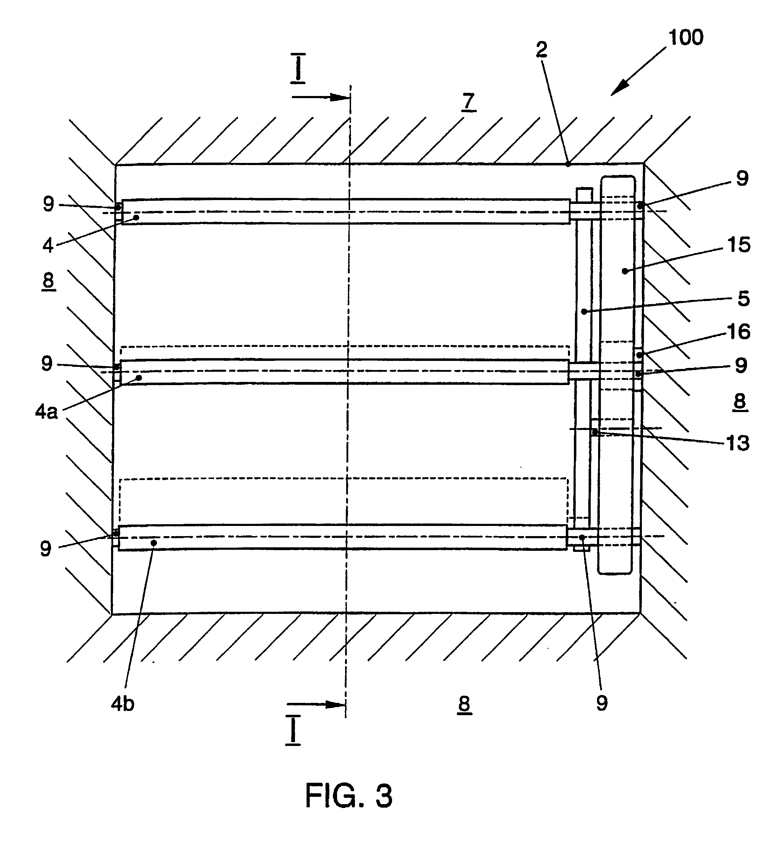

Die Lamellen 4; 4a und 4b sind öffnungsseitig mit Lagerzapfen 9 in den Seitenwänden 8 gelagert (Fig. 3). Die Lamelle 4 ist mit weiteren in den Seitenwänden 8 gelagerten Lagerzapfen 10 fest angeordnet, während die Lamellen 4a und 4b um die Lagerzapfen 9 schwenkbar sind. Die Pendelstange 5 ist an einem der Lagerzapfen 10 angelenkt und im Abstand von der Anlenkachse A mit Zapfen 11 versehen, die mit pendelstangenseitig an den Lamellen 4a und 4b ausgebildeten Führungen 12 und 12a in Eingriff stehen. Des weiteren weist die Pendelstange 5 auf der dem Zapfen 11 abgewandten Seite einen Mitnahmezapfen 13 auf, der in eine Langlochaussparung 14 eines zwischen der Pendelstange 5 und der dieser zugewandten Seitenwand 8 angeordneten Betätigungsrades 15 eingreift, die im Abstand von dessen Drehachse in radialer Richtung ausgebildet ist. Das Betätigungsrad 15 ist mit einem Gelenkzapfen 16 in der Seitenwand 8 drehbar angeordnet und weist zwei Ausnehmungen 17 und 18 zur unbehinderten Drehung um die Lagerzapfen 9 auf.

Dem öffnungsseitigen Lamellenblock 3 ist in bekannter Weise (und deshalb nicht näher dargestellt) im Innern des Luftströmungskanals 1 ein weiterer aus mehreren Lamellen gebildeter Lamellenblock 19 vorgelagert, dessen Lamellen um eine vertikale Achse schwenkbar sind.

Zur Regelung des Luftstromes wird das Betätigungsrad 15 gedreht. Durch eine Drehung gegen den Uhrzeigersinn (Fig. 1, Fig. 2) wird die Pendelstange 5 infolge der Bewegung des Mitnahmezapfens 13 um die Anlenkachse A verschwenkt, wodurch sich die Zapfen 11 auf einer Kreisbahn und in den Langlochführungen 12 und 12a bewegen. Dadurch werden die Lamellen 4a und 4b um ihre mit den Lagerzapfen 9 gegebene horizontale Lagerachse geschwenkt, die Lamelle 4b stärker als die Lamelle 4a, so dass die in Fig. 2 dargestellte Divergenzstellung in Richtung auf die Öffnung 2 zu erreicht wird, in der die Lamelle 4b parallel zur Bodenwandung 6 angeordnet ist. In den zwischen dieser und der in Fig. 1 gezeigten Parallelstellung möglichen Zwischenstellungen sind die Lamellen 4, 4a und 4b ebenfalls in einer Divergenzstellung zueinander angeordnet und zusätzlich die Lamelle 4b zur Bodenwandung 6. Dadurch wird in jeder möglichen Stellung der Lamellen eine Verwirbelung des Luftstromes vermieden.

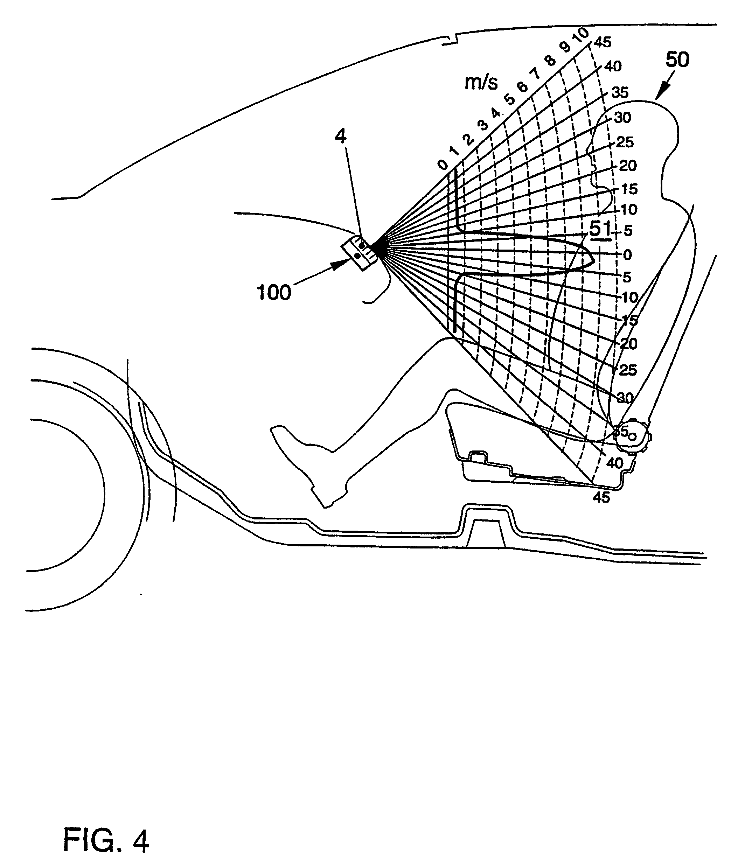

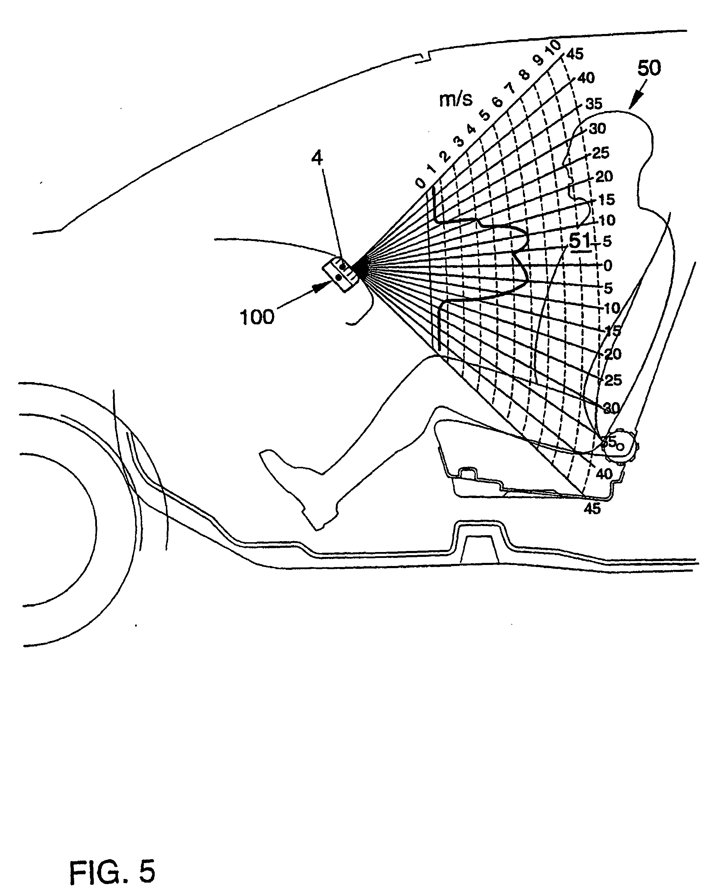

Die Wirkungsweise der erfindungsgemäßen Luftausströmdüse ist in den Figuren 4 und 5 dargestellt. Die Luftstromregulierungsdüse 100 sitzt in einer Armaturentafel und ist ausgerichtet auf einen Brustbereich 51 eines Fahrers oder Beifahrers 50. In Figur 4 ist die Luftstromregulierungsdüse 100 in der Stellung gemäß Fig. 1, so dass der Ausströmwinkel relativ gering ist. Im vorliegenden Fall beträgt der Ausströmwinkel ca. 15° bezogen auf die halbe maximale Luftströmgeschwindigkeit. Hierdurch wird eine intensive, nur einen engen Körperbereich treffende Luftströmung erreicht, die von der Person 50 als intensive Kühlung empfunden wird. Wenn eine genügende Abkühlung erreicht ist, wünscht die Person 50 eine breitere Luftstreuung, die erfindungsgemäß durch Verstellen der Luftstromregulierungsdüse 100 in die Position der Fig. 2 erreicht wird. Die Verstellung kann hierbei auch in Zwischenschritten erfolgen. Durch die Verstellung wird das Strömungsprofil (Fig. 5) deutlich verbreitert und liegt nun bei ca. 35° bei etwas niedrigerer maximalen Luftströmgeschwindigkeit. Gleichzeitig wird auch der Strömungswiderstand der Luftstromregulierungsdüse 100 verringert, so dass der Luftmassendurchsatz erhöht ist. Dies gibt der Person 50 ein angenehmes Kühlungsempfinden, da große Bereiche des Körpers von dem Luftstrom erfasst werden.

Mit der erfindungsgemäßen Luftausströmdüse erreicht man, dass ein Fahrer nach einem Einsteigen in ein insbesondere durch Sonnenstrahlen erhitztes Kraftfahrzeug sich eine starke Anströmung der Brust mit Kühlluft vornehmen kann. Etwas später kann der Fahrer bei insbesondere erhöhtem Massenstrom größere Bereiche des Körpers anströmen, wobei die Hauptströmungsrichtung der Düse weitgehend unverändert bleibt. Die Strömungsveränderung erfolgt im wesentlichen ohne Bewirken einer turbulenten Strömung, so dass deren Nachteile wie Geräuschentwicklung und schwacher Luftstrom vermieden werden.

## Patentansprüche

1. Luftstromregulierungsdüse (100) zur Belüftung eines Kraftfahrzeuginnenraums mit verstellbaren, zwangsgekoppelten Lamellen (4, 4a, 4b) als Bestandteil eines Lamellenblocks, der in einem Düsengehäuse im Bereich einer dem Kraftfahrzeuginnenraum zugeordneten Luftaustrittsöffnung (2) angeordnet ist, wobei mittels wenigstens einer Verstelleinrichtung die Lamellen (4, 4a, 4b) zwischen unterschiedlichen Verstellpositionen verstellbar sind, wobei in einer Parallelströmungs-Verstellposition die Lamellen (4, 4a, 4b) jeweils parallel zueinander ausgerichtet sind und in Divergier-Versteilpositionen wenigstens eine der Lamellen (4, 4a, 4b) bezüglich wenigstens einer weiteren Lamelle divergiert, **dadurch gekennzeichnet, dass** das Düsengehäuse im Bereich der Luftaustrittöffnung (2) wenigstens abschnittsweise mit einer trichterförmigen Erweiterung ausgebildet ist, der eine Lamelle (4b) dergestalt zugeordnet ist, dass die Lamelle (4b) in der Parallelströmungs-Verstellposition mit einem in Strömungsrichtung gesehen strömungsaufwärts liegenden hinteren Lamellen-Randbereich an der Düsengehäusewand am Beginn der trichterförmigen Erweiterung anliegt und zur Erzeugung einer Parallelströmung eine in etwa geradlinige Verlängerung der Düsengehäusewand unter Überdeckung der trichterförmigen Erweiterung ausbildet, so dass der Luftstrom in diesem Bereich entlang der der trichterförmigen Erweiterung abgewandten Oberseite der Lamelle über die Luftaustrittöffnung abströmt, und dass die Lamelle (4b) in einer Divergier-Verstellposition mit dem in Strömungsrichtung gesehen strömungsaufwärts liegenden hinteren Lamellen-Randbereich so von der Düsengehäusewand am Beginn der trichterförmigen Erweiterung abgehoben ist, dass die Lamelle (4b) beabstandet und in etwa parallel zur trichterförmigen Erweiterung verläuft, so dass ein Teilstrom des Luftstroms zwischen der Lamelle und der trichterförmigen Erweiterung über die Luftaustrittsöffnung abströmt.

2. Luftstromregulierungsdüse nach Anspruch 1, **dadurch gekennzeichnet, dass** der Luftströmungskanal (1) im Bereich des Düsengehäuseendabschnitts einen rechteckförmigen Querschnitt mit einer Bodenwandung (6), einer Deckenwandung (7) und Seitenwänden (8) aufweist, und dass die trichterförmige Erweiterung luftaustrittöffnungsseitig am Randbereich einer der Wände unter Ausbildung eines spitzen Winkels (β) mit der Längsachse ausgebildet ist.

3. Luftstromregulierungsdüse nach Anspruch 2, **dadurch gekennzeichnet, dass** die trichterförmige Erweiterung am Randbereich der Bodenwand (6) ausgebildet ist und die Bodenwandung (6) im Neigungsbereich leicht nach unten gewölbt ist.

4. Luftstromregulierungsdüse nach einem der Ansprüche 1 bis 3, **dadurch gekennzeichnet, dass** sich die Luftaustrittfläche beim Übergang von der ersten Parallelströmungs-Verstellposition in die Divergier-Verstellpositionen zunehmend vergrößert.

5. Luftstromregulierungsdüse nach einem der Ansprüche 1 bis 4, **dadurch gekennzeichnet, dass** die Lamellen (4, 4a, 4b) bezüglich ihrer Geometrie und/oder Anstellung und/oder Ausrichtung beim Übergang von der ersten Parallelströmungs-Verstellposition in eine Divergier-Verstellposition so aufeinander abgestimmt sind, dass der Luftdurchsatz gleich bleibt oder stetig erhöht wird.

6. Luftstromregulierungsdüse nach Anspruch 5, **dadurch gekennzeichnet, dass** der Luftdurchsatz in der Divergier-Verstellposition, in der die Lamelle (4b) beabstandet und in etwa parallel zur trichterförmigen Erweiterung verläuft, um wenigstens 20 % höher ist als der Luftdurchsatz in der ersten Verstellposition.

7. Luftstromregulierungsdüse nach einem der Ansprüche 1 bis 6, **dadurch gekennzeichnet, dass** die obere Lamelle (4) fest und die weiteren Lamellen (4a; 4b) im Bereich der Öffnung (2) gelenkig an den Seitenwänden (8) des Luftströmungskanals angeordnet sind, und dass das Verstellglied (5) an der oberen Lamelle (4) angelenkt ist und mit den weiteren Lamellen (4a; 4b) und mit einem um eine horizontale Achse gelagerten Betätigungsglied (15) in Eingriff steht, durch dessen Betätigung das Verstellglied (5) um die Anlenkachse (A) verschwenkbar ist, und infolge dieser Verschwenkung die weiteren Lamellen (4a; 4b) jeweils um ihre horizontale Achse verschwenkbar sind, wobei der Schwenkwinkel der jeweils unteren Lamelle (4b) größer als der der jeweils oberen Lamelle (4a) ist.

8. Luftstromregulierungsdüse nach Anspruch 7, **dadurch gekennzeichnet, dass** das Betätigungsglied als Betätigungsrad (15) ausgebildet ist.

9. Luftstromregulierungsdüse nach Anspruch 8, **dadurch gekennzeichnet, dass** das Betätigungsrad (15) auf der den Lamellen (4; 4a; 4b) abgewandten Seite des Verstellgliedes (5) neben diesem angeordnet ist und das Verstellglied (5) eine Pendelstange ist, die im Abstand von der Anlenkachse (A) einen Mitnahmezapfen (13) aufweist, der in eine im Abstand von der Drehachse des Betätigungsrades (15) an diesem angeordnete Langlochaussparung (14) eingreift, und die mit Zapfen (11) versehen ist, die in an den weiteren Lamellen (4a; 4b) angeordnete Führungen (12; 12a) eingreift, und dass das Betätigungsrad (15) mit Ausnehmungen (17; 18) für die in der Seitenwandung (8) angeordneten Lagerzapfen (9) der Lamellen (4; 4a; 4b) versehen ist.

10. Luftstromregulierungsdüse nach Anspruch 9, **dadurch gekennzeichnet, dass** die Führungen (12; 12a) an Führungselementen ausgebildet sind, die mit den Lamellen (4a; 4b) fest verbunden sind.

11. Luftstromregulierungsdüse nach einem der Ansprüche 1 bis 10, **dadurch gekennzeichnet, dass** benachbarte Lamellen bis zu 10° divergierend, insbesondere bis 9° divergierend einstellbar sind.

12. Luftstromregulierungsdüse nach Anspruch 11, **dadurch gekennzeichnet, dass** die maximale Divergenz unter den Lamellen 10° bis 35°, insbesondere 19° bis 26° beträgt.

13. Luftstromregulierungsdüse nach einem der Ansprüche 2 bis 12, **dadurch gekennzeichnet, dass** der Winkel (β) 15° bis 25°, vorzugsweise 19° bis 21°, beträgt.

14. Luftstromregulierungsdüse nach einem der Ansprüche 1 bis 13, **dadurch gekennzeichnet, dass** dem Lamellenblock (3) im Innern des Luftströmungskanals (1) ein aus mehreren um eine vertikale Achse schwenkbaren Lamellen gebildeter Lamellenblock (19) vorgelagert ist.

## Claims

1. Airflow control nozzle (100) for ventilating the inside of a motor vehicle, having adjustable, forcibly coupled slats (4, 4a, 4b) as a constituent part of a block of slats, which is arranged in a nozzle housing in the area of an air outlet opening (2) assigned to the inside of the motor vehicle, it being possible for the slats (4, 4a, 4b) to be adjusted between different adjustment positions by means of at least one adjusting device, the slats (4, 4a, 4b) in each case being aligned parallel to one another in a parallel flow adjustment position, and at least one of the slats (4, 4a, 4b) diverging with respect to at least one further slat in diverging adjustment positions, **characterized in that**, in the area of the air outlet opening (2), at least some sections of the nozzle housing are formed with a funnel-like widening, with which one slat (4b) is associated in such a way that, in the parallel flow adjustment position, the slat (4b) rests with a rear slat marginal area located upstream, as viewed in the flow direction, on the nozzle housing wall at the start of the funnel-like widening and, in order to produce a parallel flow, forms an approximately rectilinear extension to the nozzle housing wall, covering the funnel-like widening, so that the airflow in this area flows away along the upper side of the slat, facing away from the funnel-like widening, via the air outlet opening, and **in that**, in a diverging adjustment position, the slat (4b) is lifted with its rear slat marginal area located upstream, as viewed in the flow direction, off the nozzle housing wall at the start of the funnel-like widening in such a way that the slat (4b) extends at a distance from and approximately parallel to the funnel-like widening, so that part of the airflow flows away between the slat and the funnel-like widening, via the air outlet opening.

2. Airflow control nozzle according to Claim 1, **characterized in that**, in the area of the nozzle housing end section, the airflow duct (1) has a rectangular cross section comprising a bottom wall (6), a top wall (7) and side walls (8), and **in that** on the air outlet opening side, the funnel-like widening is formed in the marginal area of one of the walls, forming an acute angle (β) with the longitudinal axis.

3. Airflow control nozzle according to Claim 2, **characterized in that** the funnel-like widening is formed in the marginal area of the bottom wall (6), and the bottom wall (6) is curved slightly downward in the inclined area.

4. Airflow control nozzle according to one of Claims 1 to 3, **characterized in that** the air outlet surface is increasingly enlarged at the transition from the first parallel flow adjustment position into the diverging adjustment position.

5. Airflow control nozzle according to one of Claims 1 to 4, **characterized in that**, with respect to their geometry and/or setting and/or alignment at the transition from the first parallel flow adjustment position to a diverging adjustment position, the slats (4, 4a, 4b) are coordinated with one another in such a way that the throughput of air remains constant or is increased continuously.

6. Airflow control nozzle according to Claim 5, **characterized in that** the throughput of air in the diverging adjustment position, in which the slat (4b) is at a distance and runs approximately parallel to the funnel-like widening, is at least 20% higher than the throughput of air in the first adjustment position.

7. Airflow control nozzle according to one of Claims 1 to 6, **characterized in that** the upper slat (4) is arranged to be fixed and the further slats (4a; 4b) are arranged to be articulated to the side walls (8) of the airflow duct in the region of the opening (2), and **in that** the adjusting element (5) is articulated to the upper slat (4) and is engaged with the further slats (4a; 4b) and with an actuating element (15) which is mounted about a horizontal axis and as a result of whose actuation the adjusting element (5) can be pivoted about the articulation axis (A) and, as a result of this pivoting, the further slats (4a; 4b) can in each case be pivoted about their horizontal axis, the pivoting angle of the respective lower slat (4b) being greater than that of the respective upper slat (4a).

8. Airflow control nozzle according to Claim 7, **characterized in that** the actuating element is designed as an actuating wheel (15).

9. Airflow control nozzle according to Claim 8, **characterized in that** the actuating wheel (15) is arranged beside the adjusting element (5), on the side thereof facing away from the slats (4; 4a; 4b), and the adjusting element (5) is a swinging rod which, at a distance from the articulation axis (A), has a driver pin (13) which engages in a slotted cutout (14) arranged in the actuating wheel (15) at a distance from the axis of rotation thereof, and which is provided with pins (11) which engage in guides (12; 12a) arranged on the further slats (4a; 4b), and **in that** the actuating wheel (15) is provided with recesses (17; 18) for the bearing pins (9) of the slats (4; 4a; 4b), which are arranged in the side wall (8).

10. Airflow control nozzle according to Claim 9, **characterized in that** the guides (12; 12a) are formed on guide elements which are firmly connected to the slats (4a; 4b).

11. Airflow control nozzle according to one of Claims 1 to 10, **characterized in that** adjacent slats can be adjusted as far as 10° divergence, in particular as far as 9° divergence.

12. Airflow control nozzle according to Claim 11, **characterized in that** the maximum divergence between the slats is 10° to 35°, in particular 19° to 26°.

13. Airflow control nozzle according to one of Claims 2 to 12, **characterized in that** the angle (β) is 15° to 25°, preferably 19° to 21°.

14. Airflow control nozzle according to one of Claims 1 to 13, **characterized in that** a block of slats (19) formed by a plurality of slats that can be pivoted about a vertical axis is mounted in the interior of the airflow duct (1), upstream of the block of slats (3).

## Revendications

1. Buse de régulation d'écoulement d'air (100) pour l'aération de l'habitacle d'un véhicule, comprenant des lamelles réglables, accouplées par force (4, 4a, 4b) faisant partie d'un bloc de lamelles qui est disposé dans un carter de buse dans la région d'une ouverture de sortie d'air (2) associée à l'habitacle du véhicule, les lamelles (4, 4a, 4b) pouvant être réglées entre diverses positions de réglage au moyen d'au moins un dispositif de réglage, les lamelles (4, 4a, 4b) étant orientées parallèlement les unes aux autres dans une position de réglage à écoulement parallèle et au moins l'une des lamelles (4, 4a, 4b) divergeant par rapport à au moins une autre lamelle dans des positions de réglage divergentes, **caractérisée en ce que** le carter de buse est réalisé dans la région de l'ouverture de sortie d'air (2) au moins par portion avec un élargissement en forme d'entonnoir, auquel est associée une lamelle (4b), de telle sorte que la lamelle (4b) repose dans la position de réglage à écoulement parallèle avec une région de bord de lamelle arrière se trouvant en amont vu dans le sens de l'écoulement contre la paroi du carter de buse au début de l'élargissement en forme d'entonnoir et, pour la production d'un écoulement parallèle, constitue une prolongation approximativement droite de la paroi du carter de buse en recouvrant l'élargissement en forme d'entonnoir, de sorte que le courant d'air dans cette région s'écoule le long de la face supérieure de la lamelle opposée à l'élargissement en forme d'entonnoir par l'ouverture de sortie d'air, et que la lamelle (4b), dans une position de réglage divergente soit soulevée avec la région de bord de lamelle arrière se trouvant en amont vu dans le sens de l'écoulement de la paroi du carter de buse au début de l'élargissement en forme d'entonnoir, de telle sorte que la lamelle (4b) s'étende à une certaine distance et approximativement parallèlement à l'élargissement en forme d'entonnoir, de sorte qu'un courant partiel du courant d'air s'écoule entre la lamelle et l'élargissement en forme d'entonnoir par l'ouverture de sortie d'air.

2. Buse de régulation d'écoulement d'air selon la revendication 1, **caractérisée en ce que** le conduit d'écoulement d'air (1) présente, dans la région de la portion d'extrémité du carter de buse, une section transversale de forme rectangulaire avec une paroi de fond (6), une paroi de couvercle (7) et des parois latérales (8), et **en ce que** l'élargissement en forme d'entonnoir est réalisé du côté de l'ouverture de sortie d'air au niveau de la région de bord d'une des parois en formant un angle aigu (β) avec l'axe longitudinal.

3. Buse de régulation d'écoulement d'air selon la revendication 2, **caractérisée en ce que** l'élargissement en forme d'entonnoir est réalisé au niveau de la région de bord de la paroi de fond (6) et la paroi de fond (6) est légèrement bombée vers le bas dans la région de l'inclinaison.

4. Buse de régulation d'écoulement d'air selon l'une quelconque des revendications 1 à 3, **caractérisée en ce que** la surface de sortie d'air est agrandie de manière croissante lors du passage de la première position de réglage à écoulement parallèle dans les positions de réglage divergentes.

5. Buse de régulation d'écoulement d'air selon l'une quelconque des revendications 1 à 4, **caractérisée en ce que** les lamelles (4, 4a, 4b) sont adaptées l'une à l'autre en ce qui concerne leur géométrie et/ou leur positionnement et/ou leur orientation lors du passage de la première position de réglage à écoulement parallèle dans une position de réglage divergente, de telle sorte que le débit d'air reste le même ou augmente continuellement.

6. Buse de régulation d'écoulement d'air selon la revendication 5, **caractérisée en ce que** le débit d'air dans la position de réglage divergente dans laquelle la lamelle (4b) s'étend à une certaine distance et approximativement parallèlement à l'élargissement en forme d'entonnoir, est supérieur d'au moins 20% au débit d'air dans la première position de réglage.

7. Buse de régulation d'écoulement d'air selon l'une quelconque des revendications 1 à 6, **caractérisée en ce que** la lamelle supérieure (4) est disposée fixement et les autres lamelles (4a ; 4b) sont disposées dans la région de l'ouverture (2) de manière articulée aux parois latérales (8) du conduit d'écoulement d'air, et **en ce que** l'organe de réglage (5) est articulé à la lamelle supérieure (4) et est en prise avec les autres lamelles (4a ; 4b) et avec un organe d'actionnement (15) monté autour d'un axe horizontal, dont l'actionnement permet de faire pivoter l'organe de réglage (5) autour de l'axe d'articulation (A), et suite à ce pivotement, les autres lamelles (4a ; 4b) peuvent pivoter respectivement autour de leur axe horizontal, l'angle de pivotement de la lamelle inférieure (4b) étant à chaque fois plus grand que celui de la lamelle respective supérieure (4a).

8. Buse de régulation d'écoulement d'air selon la revendication 7, **caractérisée en ce que** l'organe d'actionnement est réalisé en tant que roue d'actionnement (15).

9. Buse de régulation d'écoulement d'air selon la revendication 8, **caractérisée en ce que** la roue d'actionnement (15) est disposée du côté de l'organe de réglage (5) opposé aux lamelles (4 ; 4a ; 4b) à côté de celui-ci et l'organe de réglage (5) est une tige pendulaire qui présente, à distance de l'axe d'articulation (A), un tourillon d'entraînement (13) qui vient en prise dans un évidement de trou oblong (14) disposé à distance de l'axe de rotation de la roue d'actionnement (15) sur celle-ci, et qui est pourvue d'un tourillon (11) qui vient en prise dans des guides (12 ; 12a) disposés sur les autres lamelles (4a ; 4b), et **en ce que** la roue d'actionnement (15) est pourvue d'évidements (17 ; 18) pour les tourillons (9) des lamelles (4 ; 4a ; 4b) disposés dans la paroi latérale (8).

10. Buse de régulation d'écoulement d'air selon la revendication 9, **caractérisée en ce que** les guides (12 ; 12a) sont réalisés sur des éléments de guidage qui sont connectés fixement aux lamelles (4a ; 4b).

11. Buse de régulation d'écoulement d'air selon l'une quelconque des revendications 1 à 10, **caractérisée en ce que** les lamelles voisines sont ajustables avec une divergence jusqu'à 10°, en particulier jusqu'à 9°.

12. Buse de régulation d'écoulement d'air selon la revendication 11, **caractérisée en ce que** la divergence maximale entre les lamelles est de 10° à 35°, en particulier de 19° à 26°.

13. Buse de régulation d'écoulement d'air selon l'une quelconque des revendications 2 à 12, **caractérisée en ce que** l'angle (β) vaut 15° à 25°, de préférence 19° à 21°.

14. Buse de régulation d'écoulement d'air selon l'une quelconque des revendications 1 à 13, **caractérisée en ce qu'**un bloc de lamelles (19) formé de plusieurs lamelles pouvant pivoter autour d'un axe vertical est placé avant le bloc de lamelles (3) à l'intérieur du conduit d'écoulement d'air (1).
